Europäisches Patentamt

European Patent Office

Office européen des brevets

(19)

(11) **EP 0 604 476 B1**

(12) **EUROPÄISCHE PATENTSCHRIFT**

(45) Veröffentlichungstag und Bekanntmachung des Hinweises auf die Patenterteilung:
**23.04.1997 Patentblatt 1997/17**

(21) Anmeldenummer: **92918595.7**

(22) Anmeldetag: **04.09.1992**

(51) Int Cl.[6]: **G10L 5/06**, G10L 5/00

(86) Internationale Anmeldenummer:
**PCT/DE92/00744**

(87) Internationale Veröffentlichungsnummer:
**WO 93/06591 (01.04.1993 Gazette 1993/09)**

(54) **VERFAHREN ZUR ERKENNUNG VON MUSTERN IN ZEITVARIANTEN MESSSIGNALEN**

PROCESS FOR RECOGNIZING PATTERNS IN TIME-VARYING MEASUREMENT SIGNALS

PROCEDE DE RECONNAISSANCE DES FORMES DANS DES SIGNAUX DE MESURE VARIABLES DANS LE TEMPS

(84) Benannte Vertragsstaaten:
**DE FR GB NL SE**

(30) Priorität: **20.09.1991 DE 4131387**

(43) Veröffentlichungstag der Anmeldung:
**06.07.1994 Patentblatt 1994/27**

(73) Patentinhaber: **SIEMENS AKTIENGESELLSCHAFT**
**80333 München (DE)**

(72) Erfinder: **ZÜNKLER, Klaus**
**D-81675 München (DE)**

(56) Entgegenhaltungen:
**DE-A- 4 010 028        US-A- 4 677 672**
**US-A- 4 975 959**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

In verschiedenen Bereichen der Mustererkennung ist man mit dem Problem konfrontiert, daß hochdimensionale Merkmalsvektoren verwendet werden müssen, deren einzelne Komponenten, die Merkmale, bei verschiedenen zu erkennenden Mustern in unterschiedlicher Weise relevant sind. Diese Situation tritt insbesondere in der automatischen Spracherkennung auf, bei der unter Verwendung bisheriger Erkennungssysteme leicht Verwechslungen von phonetisch ähnlichen Worten auftreten können (z. B. "zwei" und "drei"). Besonders leicht werden mit bekannten Erkennungssystemen Wörter verwechselt, die sich nur in einem einzigen Phonem unterscheiden (z. B. "dem" und "den"). Bei sprecherunabhängiger Erkennung von Sprache, die über Telefonleitungen übertragen wird, verschärft sich dieses Problem noch, weil durch die reduzierte Übertragungsbandbreite von 3,4 kHz sprachrelevante Frequenzbereiche verloren gehen (z. B. sind die Laute /s/ und /f/ über Telefon nicht mehr zu unterscheiden).

Einige dieser bekannten Erkennungssysteme basieren auf einem direkten Mustervergleich von gespeicherten Referenzwörtern und dem aktuell gesprochenen Wort unter Berücksichtigung von zeitlichen Sprechgeschwindigkeitsschwankungen. Diese werden z. B. mit Hilfe der dynamischen Programmierung berücksichtigt. Für solche Erkennungssysteme ist ein Ansatz von Moore vorgeschlagen worden (R.K. Moore, M.J. Russel, M.J. Tomlinson, "The discriminative network: A mechanism for focusing recognition in whole word pattern matching", IEEE International Conference on Acoustics, Speech and Signal Processing, pp. 1041-1044, Boston, 1983, ICASSP), der automatisch die unterscheidungsrelevanten Teile von Wörtern findet und diese gegenüber den anderen Teilen stärker gewichtet. Ein Nachteil dieses Verfahrens ist, daß die automatische Suche von unterscheidungsrelevanten Teilen bei verwechselbaren Wortpaaren mit Fehlern behaftet sein kann. Unterscheidungsrelevante Wortteile werden nicht immer gefunden, oder es werden Wortteile fälschlicherweise als unterscheidungsrelevant angesehen. Dieses Problem läßt sich mit der Methode der dynamischen Programmierung allein auch grundsätzlich nicht lösen.

Das Dokument DE-4 010 028 offenbart ein Verfahren zur Erkennung von Mustern (Sprachsignalen) in dem eine zweistufige Analyse durchgeführt wird, wobei die erste Stufe Hidden-Markov-Modelle und den Viterbi-Alogorithmus verwendet.

In anderen Bereichen der Signalverarbeitung und Mustererkennung treten ganz ähnliche Probleme auf wie auf dem Gebiet der Spracherkennung. Der Erfindung liegt deshalb die Aufgabe zugrunde, ein Verfahren zur Erkennung von Mustern in zeitvarianten Meßsignalen anzugeben, mit dem die Häufigkeit der Verwechslung ähnlicher Merkmalsvektoren bedeutend verringert werden kann. Diese Aufgabe wird mit Hilfe eines Verfahrens zur Erkennung von Mustern in zeitvarianten Meßsignalen durch Klassifikation einer zeitlichen Folge von Mustervektoren und paarweise Nachklassifikation mit Merkmalen nach Anspruch 1 gelöst.

Bei diesem Verfahren wird die zu klassifizierende Folge von Merkmalsvektoren mit Hilfe eines Viterbi-Dekodierungs-Algorithmus segmentiert, indem diese zu klassifizierende Folge mit einem Satz von Hidden-Markov-Modellen verglichen wird. Hierzu wird für jedes Hidden-Markov-Modell eine Gesamt-Emissionswahrscheinlichkeit für die Erzeugung der zu klassifizierenden Folge durch dieses Hidden-Markov-Modell berechnet. Anschließend wird durch Rückwärtsverkettung ein optimaler Zuordnungspfad von Merkmalsvektoren zu Zuständen der Hidden-Markov-Modelle ermittelt.

Für ausgewählte oder alle Paare von Hidden-Markov-Modellen wird ein diskriminierender Vergleich ihrer Zuordnungen durchgeführt, indem modifizierte Gesamt-Emissionswahrscheinlichkeiten für jedes Hidden-Markov-Modell eines Paares unter der Voraussetzung berechnet werden, daß das jeweils andere Hidden-Markov-Modell des selben Paares mit dem betrachteten Hidden-Markov-Modell konkurriert, und indem das jeweils wahrscheinlichere Hidden-Markov-Modell eines Paares ermittelt wird. Unter allen betrachteten Paaren wird daraufhin das Hidden-Markov-Modell mit der größten Gesamt-Emissionswahrscheinlichkeit ausgewählt.

Das Verfahren hat den Vorteil, daß ein zu klassifizierendes Muster nicht mit einem Referenzmuster, sondern mit einer statistischen Verteilungsfunktion vieler Referenzmuster verglichen wird. Auf diese Weise erhält man nicht einen einfachen Abstand zwischen zwei zu erkennenden Mustern, wie dies bei der dynamischen Programmierung der Fall ist, sondern eine Wahrscheinlichkeit für die Erzeugung eines Musters durch ein Hidden-Markov-Modell. Die Methode der Hidden-Markov-Modelle ist in dem Artikel von L.R. Rabiner und W.H. Juang, "An introduction to hidden markov models", IEEE Transactions on Acoustics, Speech and Signal Processing, (1):4-16, January 1986 umfassend beschrieben. Im Gegensatz zu dem Verfahren von Moore werden in dem hier vorliegenden Verfahren keine heuristisch berechneten Gewichte, sondern informationstheoretisch begründete Gewichte verwendet. Diese Gewichte repräsentieren Erkennungsraten, welche anhand der den Hidden-Markov-Modellen zugrundeliegenden Verteilungsdichtefunktionen abgeschätzt sind. Dabei bedeutet ein Gewicht von 1,0 eine hundertprozentige geschätzte Erkennungsrate, d. h. daß die Erkennung zu diesem Analysezeitpunkt absolut sicher ist, während ein Gewicht von 0 bedeutet, daß keine Aussage über das zu klassifizierende Muster gemacht werden kann.

In dem hier vorliegenden Verfahren werden nicht die Emissionswahrscheinlichkeiten von Merkmalsvektoren, sondern Emissionswahrscheinlichkeiten einzelner Komponenten von Merkmalsvektoren gewichtet. Dadurch ist eine unterschiedliche Gewichtung der Relevanz einzelner Merkmalsvektorkomponenten möglich, wodurch gerade bei Verwendung hochdimensionaler Merkmalsräume der Einfluß einzelner Komponenten auf die Erkennungsleistung gezielt beeinflußt werden kann.

Vorteilhafte Weiterbildungen der Erfindung ergeben sich aus den Unteransprüchen.

Figur 1 zeigt Zustandspfade für Modelle der Worte "drei" und "zwei".

Figur 2 zeigt ein Schema zur Generierung von neuen Satzhypothesen bei fließender Sprache.

Im folgenden wird die Erfindung anhand eines bevorzugten Ausführungsbeispiels und mit Hilfe der Figuren näher beschrieben.

Dabei wird als spezielles Anwendungsgebiet die Spracherkennung gewählt, um die Erfindung in konkreterer und damit verständlicherer Form erklären zu können. Die Erfindung ist jedoch über das Gebiet der Spracherkennung hinaus grundsätzlich im gesamten Bereich der Mustererkennung in zeitvarianten Meßsignalen anwendbar.

Das Verfahren beruht auf einer Hauptklassifikation mit Hilfe eines Viterbi-Dekodierungs-Algorithmus, welchem eine diskriminierende Nachklassifikation nachgeschaltet ist, mit welcher das Klassifikationsproblem auf den paarweisen Vergleich von Phonemen durch Gewichtung von Merkmalsvektorkomponenten reduziert wird. Dabei werden unterschiedliche Merkmalsvektorkomponenten nach Maßgabe ihrer Fähigkeit zur Unterscheidung von Phonempaaren unterschiedlich gewichtet. In Experimenten zeigte sich, daß die sprecherunabhängige Erkennungsrate bei deutscher Sprache von 90 auf 96 % verbessert werden konnte. Bei Verwendung eines größeren Trainingsdatensatzes und gut trainierten Wortmodellen kann die Erkennungsleistung weiter gesteigert werden.

Die Erfindung basiert auf den bereits vorgestellten Hidden-Markov-Modellen für Phoneme und erweitert den Erkennungsprozeß um eine Nachklassifikation, in welcher die Unterscheidungsrelevanten Wortteile oder Phoneme in einem zweiten Schritt nach der Hauptklassifikation getrennt untersucht werden. Das gesamte Verfahren besteht aus zwei Teilen, einer Hauptklassifikation mit Hilfe es Viterbi-Dekodierungs-Algorithmus und einer nachgeschalteten Nachklassifikation durch einen paarweisen Vergleich von Hidden-Markov-Modellen. Im Verlaufe des Viterbi-Dekodierungs-Algorithmus werden Gesamt-Emissionswahrscheinlichkeiten für Hidden-Markov-Modelle berechnet und mit Hilfe eines Backtracking-Verfahrens wird der beste Zuordnungspfad von Merkmalsvektoren zu Zuständen von Hidden-Markov-Modellen gefunden. In einer Variante des Verfahrens werden anschließend die Hidden-Markov-Modelle nach ihrer Gesamt-Emissionswahrscheinlichkeit sortiert. Im Nachklassifikationsschritt werden geeignet ausgewählte oder alle Paare von Hidden-Markov-Modellen untersucht, indem für jedes dieser Paare ein diskriminierender Vergleich ihrer Zuordnungen durchgeführt wird. Die Paare von Hidden-Markov-Modellen werden typischerweise nach Werten Ihrer Gesamt-Emissionswahrscheinlichkeit ausgewählt. Der diskriminierende Vergleich der Zuordnungen von Hidden-Markov-Modellen zu Merkmalsvektoren erfolgt, indem modifizierte Gesamt-Emissionswahrscheinlichkeiten für jedes Hidden-Markov-Modell eines Paares unter der Voraussetzung berechnet werden, daß jeweils das andere Hidden-Markov-Modell des selben Paares mit dem betrachteten Hidden-Markov-Modell konkurriert, und indem das jeweils wahrscheinlichere Hidden-Markov-Modell eines Paares ermittelt wird. Unter allen betrachteten Paaren wird das Hidden-Markov-Modell mit der größten Gesamt-Emissionswahrscheinlichkeit ausgewählt. Dieses ausgewählte Hidden-Markov-Modell mit der größten Gesamt-Emissionswahrscheinlichkeit entspricht dem erkannten Muster, im Beispiel der Spracherkennung dem zu erkennenden Wort.

Die Gesamt-Emissionswahrscheinlichkeiten für die Erzeugung der zu klassifizierenden Folge durch ein bestimmtes Hidden-Markov-Modell werden berechnet, indem für alle Merkmalsvektoren der zu klassifizierenden Folge und für alle Zustände des Hidden-Markov-Modells eine lokale logarithmierte Emissionswahrscheinlichkeit für die Erzeugung des jeweiligen Merkmalsvektors durch den jeweiligen Zustand berechnet wird, und indem eine akkumulierte logarithmische Emissionswahrscheinlichkeit für jeden Zustand als Summe aus seiner lokalen logarithmierten Emissionswahrscheinlichkeit und der akkumulierten logarithmischen Emissionswahrscheinlichkeit seines besten möglichen Vorgängerzustandes berechnet wird, wobei der beste mögliche Vorgängerzustand protokolliert wird.

Der diskriminierende Vergleich der Zuordnungen zweier Hidden-Markov-Modelle wird bevorzugt durchgeführt, indem für alle Merkmalsvektoren der zeitlichen Folge eine lokale logarithmierte modifizierte Emissionswahrscheinlichkeit für die Erzeugung des jeweiligen Merkmalsvektors durch den entsprechenden Zustand des jeweiligen Hidden-Markov-Modells berechnet wird, und indem diese lokalen logarithmierten modifizierten Emissionswahrscheinlichkeiten rekursiv längs des bereits berechneten Zuordnungspfades zu einer akkumulierten logarithmierten modifizierten Emissionswahrscheinlichkeit addiert werden.

Die modifizierte logarithmierte Emissionswahrscheinlichkeit für die Erzeugung eines Merkmalsvektors durch einen Zustand eines Hidden-Markov-Modells wird berechnet, indem eine logarithmierte Emissionswahrscheinlichkeit für jede Komponente dieses Merkmalsvektors berechnet und mit einem Gewicht multipliziert wird, und indem diese gewichteten logarithmierten Emissionswahrscheinlichkeiten über alle Komponenten dieses Merkmalsvektors summiert werden. Dabei ist das Gewicht einer Komponente eines Merkmalsvektors ein Maß für die Zuverlässigkeit dieser Komponente unter der Voraussetzung, daß nur zwei bestimmte Zustände eines Hidden-Markov-Modells miteinander verglichen werden sollen.

In einer Verfahrensvariante werden die Gewichte mit Hilfe eines statistischen Gütemaßes für die Zuverlässigkeit einer Merkmalsvektorkomponente ermittelt. In einer anderen Verfahrensvariante werden die Gewichte in einem separaten Trainingsverfahren ermittelt.

Im Hauptklassifikationsschritt werden aus der Literatur bekannte Verfahren verwendet. Im Nachklassifikationsschritt werden die unterscheidungsrelevanten Wortteile gesucht und entsprechend ihrer Unterscheidungsfähigkeit gewichtet. Bei einer einfachen Übertragung des Verfahrens von Moore auf die Hidden-Markov-Modelle würden die Wahrscheinlichkeiten der unterscheidungsrelevanten Phoneme mit einer heuristisch berechneten Gewichtung multipliziert. In der vorliegenden Erfindung werden dagegen theoretisch begründete Gewichtungen benutzt. Diese stellen die anhand der den Modellen zugrundeliegenden Verteilungsdichtefunktionen abgeschätzten Erkennungsraten dar: d. h. ein Gewicht von 1 bedeutet eine hundertprozentige geschätzte Erkennungsrate, während ein Gewicht von 0 eine zufällige Erkennungsrate bedeutet.

Darüber hinaus werden nicht die Emissionswahrscheinlichkeiten der Merkmalsvektoren gewichtet, sondern die Anteile von jeder einzelnen Merkmalsvektorkomponente. Hierdurch wird der Effekt ausgeglichen, daß durch das Anwachsen der Komponentenzahl von neueren Erkennungssystemen der Einfluß einzelner Komponenten zu stark in den Hintergrund tritt. Es leuchtet sofort ein, wenn ein /s/ von einer Sprachpause unterschieden werden soll, daß die Signalenergie eine sehr wichtige Merkmalskomponente ist, während sie nichts zu einer Unterscheidung, z. B. der Laute /o/ und /u/ beitragen kann.

Als Abschätzung der Erkennungsrate wird der sog. Kolmogorov-Abstand benutzt, der bei der Unterscheidung von nur zwei Konkurrenten sogar die exakte Abschätzung darstellt. Im Zwei-Klassenfall läßt sich die Fehlerwahrscheinlichkeit sofort angeben (K. Fukunaga, "Introduction to statistical pattern recognition", Academic Press, New York, 1972; J. Kittler, "Mathematical methods of feature selection in patten recognition", Internat. J. Man-Machine Studies, 7: 603-637, 1975):

$$(1) \quad E^{*} = 1/2 \left( 1 - \int dx \ p(x) \ |p(k_1|x) - p(k_2|x)| \right)$$

Hierbei bedeuten x den Merkmalsvektor, p (k/x) die bedingte Wahrscheinlichkeit für ein Auftreten der Klasse k bei Vorliegen des Merkmalsvektors x. $k_1$ und $k_2$ bezeichnen zwei zu unterscheidende Klassen oder Phoneme. Das Integral auf der rechten Seite der Gleichung kann als Abstandsmaß interpretiert werden, es ist in diesem Fall der Kolmogorov-Abstand:

$$(2) \quad J_K = \int dx \ p(x) \ |p(k_1|x) - p(k_2|x)|$$

Dieser Abstand wird im Gegensatz zu seiner eigentlichen Definition für Vektoren so modifiziert, daß die Anteile einzelner Komponenten getrennt berechnet werden:

$$(3) \quad j_K(x_i) = \int dx_i \ p(x_i) \ |p(k_1|x_i) - p(k_2|x_i)|$$

Eine wesentliche Aufgabe der Nachklassifikation ist es, das Spracherkennungsproblem auf die Unterscheidung von jeweils zwei Sprachlauten zurückzuführen. Die Verwendung des Viterbi-Dekodierungsverfahrens in Verbindung mit einem anschließenden Backtracking in der Hauptklassifikation stellt sicher, daß in der Hauptklassifikation eine Liste von besten Wortkandidaten ausgegeben wird, einschließlich einer Zuordnung von symbolischen Sprachlauten zum zeitlichen Sprachsignalverlauf (Segmentierung).

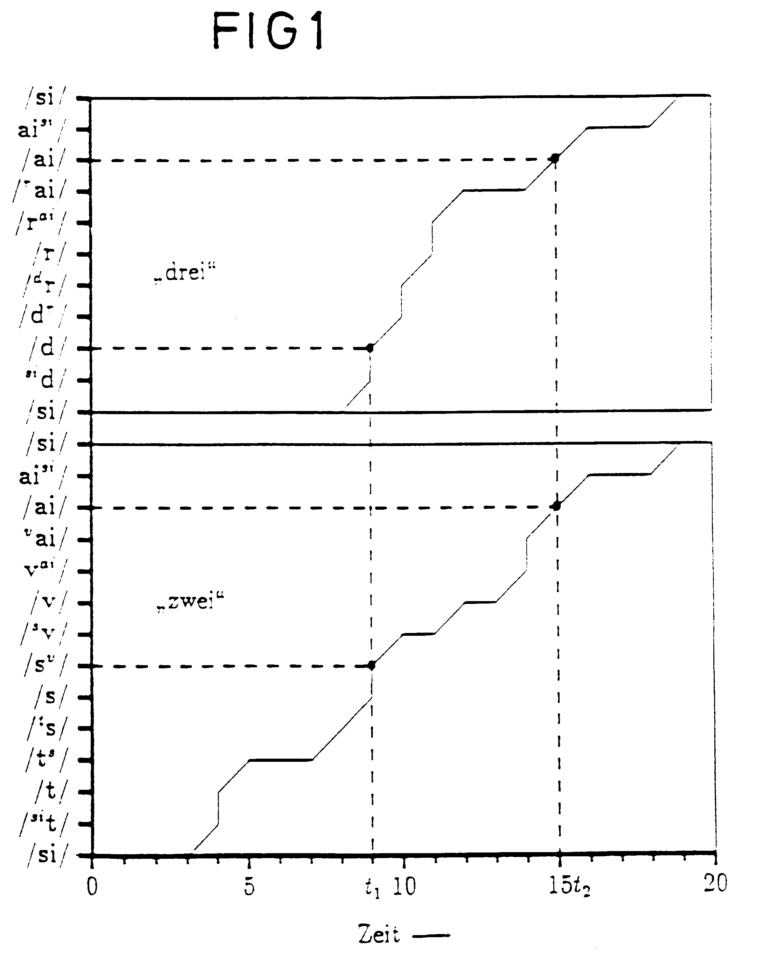

Im ersten Schritt der Nachklassifikation wird der erste Wortkandidat mit dem zweiten Wortkandidaten verglichen unter Berücksichtigung der unterscheidungsrelevanten Phoneme und Merkmalsvektorkomponenten. Zu jedem Zeitpunkt des Vergleichs befindet sich jedes Hidden-Markov-Modell in genau einem Zustand eines Phonems. Dies wird anhand des in Fig. 1 gezeigten Beispiels deutlich. Bei der Erkennung von Ziffernworten werden häufig die Worte "drei" und "zwei" verwechselt. In fast allen Fällen liegt das richtige Wort unter den beiden besten und die Gesamterzeugungswahrscheinlichkeiten sind ähnlich. Die unterscheidungsrelevanten Teile dieser beiden Wörter sind relativ kurz, bezogen auf ihre Gesamtlänge. In Fig. 1 wird davon ausgegangen, daß tatsächlich das Wort "zwei" gesprochen wurde. Dargestellt sind in Fig. 1 die im Erkennungsprozeß mit der Viterbi-Dekodierung gefundenen Zeitverzerrungspfade oder Zustandspfade der beiden besten Wortkandidaten. Die Referenzmodelle bestehen hier aus kontextabhangigen Phonem-Modellen.

Auf der Abszisse liegt das unbekannte gesprochene Wort, während auf der Ordinate die Phonem-Modelle für die zu vergleichenden Wörter liegen. Um die Trennbarkeit dieser Worte zu erhöhen, wird folgendes Verfahren für die Nachklassifikation verwendet: Zu jedem Zeitpunkt t wird ein korrespondierendes Paar von Phonem-Modellen betrachtet, die zu diesem Zeitpunkt auf dem optimalen Zustandspfad auftreten. Zum Zeitpunkt $t_1$ tritt im Wort "zwei" das Modell "s$^v$" (Endsegment von /s/ mit Rechtskontext /v/) auf, dagegen im wort "drei" zur gleichen Zeit das Modell "d" (Mittelsegment von /d/). Es muß also eine Bewertung der Wahrscheinlichkeit dieser beiden Modelle erfolgen unter der Randbedingung, daß auch nur diese beiden Klassen auftreten können. Dann können die Komponenten des Merkmalsvektors so bewertet werden, daß eine maximale Trennbarkeit zwischen diesen beiden Klassen erreicht wird. Analog werden zum Zeitpunkt $t_2$ die Klassen "ai" vom Wortmodell "zwei" mit "ai" von "drei" verglichen. In diesem Fall verschwindet die Trennbarkeit, da die gleichen Phonem-Modelle verwendet werden. Die neu bewerteten Wahrscheinlichkeiten - die sich nun aus den gewichteten Wahrscheinlichkeitsanteilen der Vektorkomponenten zusammensetzen - werden über die beiden Pfade aufmultipliziert. Die Entscheidung wird dann zugunsten desjenigen Wortmodelles mit der höheren Wahrscheinlichkeit getroffen.

Das bessere Modell wird dann mit dem nächsten Kandidaten aus der Wortliste verglichen. Dieses Verfahren wird so lange fortgesetzt, bis ein geeignetes Abbruchkriterium erfüllt ist. Dieses kann entweder der Abbruch nach einer bestimmten Anzahl von Kandidaten sein, oder die Unterschreitung einer Mindesterzeugungswahrscheinlichkeit des Wortkandidaten.

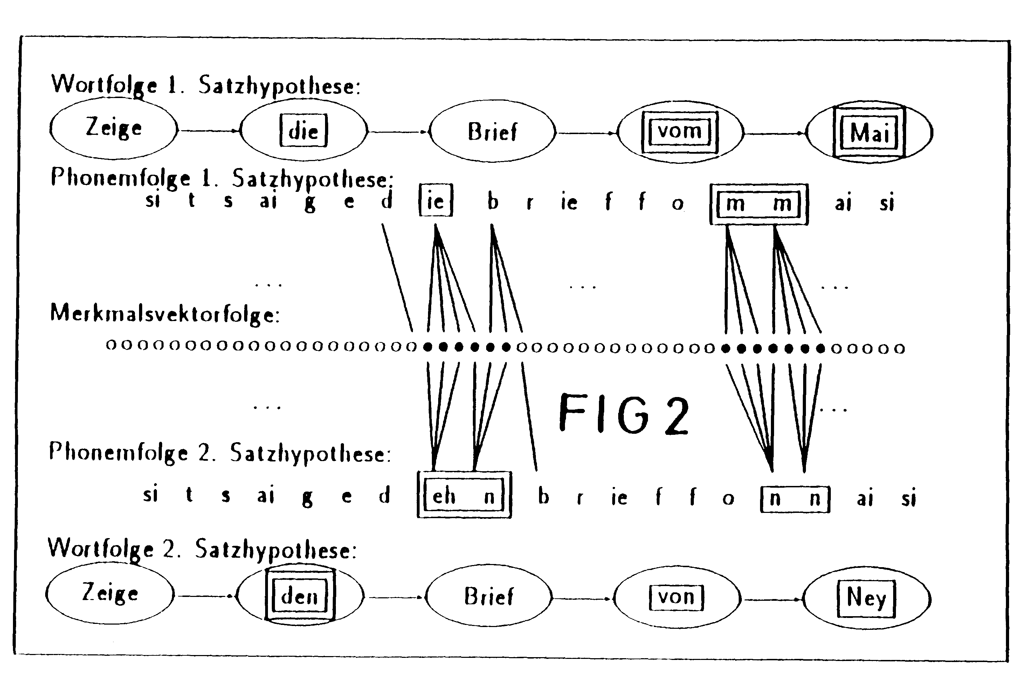

Bei fließender Sprache kann das Verfahren noch erweitert werden. Bei strenger Analogie zum Erkennungsverfahren für Einzelwörter kann nur aus bereits vorhandenen Satzhypothesen eine Beste ausgewählt werden, aber es kann keine Neue generiert werden. Durch die Erweiterung können auch neue Satzhypothesen aus den vorhandenen generiert werden. Dazu wird Wortweise eine Entscheidung getroffen, welches Wort aus den beiden Satzhypothesen besser ist. Die erkannte Äußerung ist also eine Zusammensetzung der besten Wörter. Fig. 2 zeigt dies anhand eines Beispiels.

Die wesentlichen Verbesserungen gegenüber bekannten Verfahren sind also:

- Die Rückführung der Spracherkennung auf den Vergleich von nur jeweils zwei Sprachlauten (Phonemen).

- Gewichtung der Emissionswahrscheinlichkeiten der Sprachlaute mit Gewichten, welche auf ein bestimmtes Paar von Sprachlauten adaptiert wurden.

- Verwendung von wahrscheinlichkeitstheoretischen Abstandsmaßen (hier Kolmogorov-Abstand) als Gewichtungsfaktoren.

- Generierung von neuen Satzhypothesen mit Hilfe der Nachklassifikation bei fließender Sprache.

Für die Berechnung der Emissionswahrscheinlichkeiten wird angenommen, daß diese Wahrscheinlichkeiten gewichtete Mischungen Gauß'scher Wahrscheinlichkeitsdichtefunktionen mit diagonaler Kovarianzmatrix sind. Unter der Voraussetzung, daß für einen gegebenen Merkmalsvektor x der Beitrag der am besten passenden Mode viel größer ist als der aller anderen Moden der Mischung, kann der Einfluß letzterer vernachlässigt werden. Da der Viterbi-Algorithmus zum Training und zur Erkennung verwendet wird, kann die logarithmierte Wahrscheinlichkeit wie folgt beschrieben werden:

$$(4) \qquad - \ln p(x) = \frac{N}{2} \ln(2\pi) - \ln c_k$$

$$+ \sum_{n=1,...,N} \ln \sigma_{kn} + \frac{1}{2} \sum_{n=1,...,N} \frac{(x_n - \mu_{kn})^2}{(\sigma_{kn})^2}$$

wobei N die Zahl der Vektorkomponenten und $c_k$ das Gewicht der besten Mode k bedeutet. Wenn man die Varianzen als konstant annimmt, ist dieser Ausdruck im wesentlichen der euklidische Abstand zwischen dem Merkmalsvektor und dem Hauptvektor der am besten passenden Mode.

Bei der hier vorgeschlagenen Nachklassifikation wird dieser Abstand modifiziert, um die Klassendiskriminierung zu verbessern. Dies geschieht durch Anwendung spezifischer Gewichte auf jede Vektorkomponente entsprechend einer Fähigkeit der Vektorkomponenten zwischen zwei Klassen zu unterscheiden:

$$(5) \qquad - \ln p_{mod}(x) = const. - \ln c_k$$

$$+ \sum_{n=1,\dots,N} \ln \sigma_{kn} + \frac{1}{2} \sum_{n=1,\dots,N} \frac{w_n (x_n - \mu_{kn})^2}{(\sigma_{kn})^2}$$

Im Sinne einer optimalen Diskriminierung hängen die Gewichte $w_n$ ab von den beiden zu trennenden Klassen. Deshalb besteht das erste Problem der Klassifikation darin, daß k-Klassenproblem auf zwei Klassen zu reduzieren. Dies ist natürlich nicht in einem einzelnen Schritt möglich, da die Zahl der zu vergleichenden Klassen in typischen Anwendungen wie z. B. in er Spracherkennung für eine solche Vorgehensweise viel zu groß ist. Aus diesem Grunde wird ein Nachverarbeitungsschritt verwendet, welche die beste Hypothese aus einer Liste von Hypothesen mit Hilfe eines Viterbi-Dekoders auf der Grundlage von Hidden-Markov-Modellen auswählt. Der Viterbi-Dekoder muß dabei eine Rückwärtsverkettung (Backtracking) leisten, da die besten Pfade einer jeden Hypothese im Nachverarbeitungsschritt benötigt werden. Die Reduktion auf zwei Klassen wird durch einen paarweisen Vergleich zweier Hypothesen bewerkstelligt. Im Beispiel der Spracherkennung besteht jede zeitliche Teilfolge aus einem Paar konkurrierender Phoneme, welche durch den vorhergehenden Rückwärtsverkettungsschritt bestimmt worden sind. Die Emissionswahrscheinlichkeiten dieser beiden Phoneme werden neu berechnet unter Berücksichtigung der Unterscheidungskraft einer jeden Merkmalskomponente in diesem speziellen Fall. Die gewichteten Emissionswahrscheinlichkeiten werden entlang der entsprechenden Viterbi-Pfade multipliziert, wobei eine modifizierte totale Emissionswahrscheinlichkeit für die Satzhypothese berechnet wird. Nachdem die bessere Hypothese ausgewählt worden ist, wird diese mit dem folgenden Kandidaten der Liste von Hypothesen verglichen. Dieses Vorgehen wird fortgesetzt, bis eine vorgegebene Zahl von Hypothesen erreicht ist.

Der Hauptvorteil der Integration einer Unterscheidungsprozedur in den Erkennungsprozeß besteht in der Fähigkeit zu einer sehr genauen und subtilen Unterscheidung zwischen Phonemen ohne großen rechnerischen Aufwand. Der mit dem vorgeschlagenen Verfahren verbundene Mehraufwand ist vergleichsweise klein im Vergleich zur gesamten Erkennungszeit, da nur die Wahrscheinlichkeiten längs des Viterbi-Pfades neu berechnet werden müssen.

Eine weitere Aufgabe besteht darin, die Gewichte $w_n$ zur Wichtung der Merkmalsvektorkomponenten zu bestimmen. Für die Verwendung in dem hier vorgeschlagenen Verfahren werden die Gewichte als statistische oder informationstheoretische Separabilitätsmaße berechnet. Aus bekannten Ansätzen sind dagegen heuristische Gewichtungen der Merkmale bekannt. Eine Möglichkeit besteht darin, ein modifiziertes Transinformationsmaß zu benutzen. Die ursprüngliche Definition für die Transinformation ist durch den Ausdruck

$$(6) \qquad J_T = \sum_{n=1,\dots,N} \int p(k)\, p(x|k)\, \operatorname{ld}\left(\frac{p(x|k)}{p(x)}\right) dx$$

gegeben. Dies ist ein sehr allgemeines Maß für die Qualität von Verteilungen mehrdimensionaler Zufallsgrößen und besitzt alle notwendigen Eigenschaften eines Abstandsmaßes. Es ist monoton zwischen zwei extremen Werten: das Maß verschwindet für den Fall keiner Trennung zwischen den Klassen und nimmt den Wert 1 an im Falle einer vollständigen fehlerfreien Separation. Für eine Verwendung in dem hier vorgeschlagenen diskriminierenden Nachverarbeitungsschritt muß die oben angeführte Definition modifiziert werden, da sie nach Merkmalsvektorkomponenten aufgespalten werden muß. Da in dem Nachverarbeitungsschritt lediglich Paare von Klassen miteinander verglichen werden, muß in dem hier vorliegenden Verfahren die Transinformation auch lediglich unter Berücksichtigung von Klassenpaaren berechnet werden. Daraus ergibt sich eine dreidimensionale Matrix, deren Elemente wie folgt gegeben sind:

$$(7) \qquad j_T(k_1,k_2,n) = \frac{1}{2} \sum_{k=k_1,k_2} \int p(x_n|k)\, \operatorname{ld}\left(\frac{p(x_n|k)}{p(x_n)}\right) dx_n$$

wobei $k_1$ und $k_2$ die zu vergleichenden Klassen numerieren und $x_n$ eine Komponente eines Merkmalsvektors repräsentiert. In dem vorgeschlagenen Nachklassifikationsschritt werden für jeden paarweisen Vergleich die Eigenwerte dieser Matrix für die in Formel 5 dargestellte Gewichtung ausgewählt, nämlich $w_n = j_T(k_1, k_2, n)$ für den Vergleich der Klassen $k_1$ und $k_2$.

Da diese Werte immer noch recht schwierig zu berechnen sind, wurde in Experimenten ein anderes Abstandsmaß versuchsweise verwendet. Der Komogorov-Abstand (2) ist ein Maß für die erwartete Erkennungsmarke für gegebene Klassen und Merkmalsverteilungen. Analog zu dem Transformationsmaß muß dieses aufgespalten werden in eine dreidimensionale Matrix $J_K$ mit den Elementen:

$$(8) \qquad j_K(k_1,k_2,n) = \int dx_n\, p(x_n)\, |p(k_1|x_n) - p(k_2|x_n)|$$

Anwendung auf die Einzelworterkennung

Die Einzelworterkennung basiert auf kontextabhängigen Phonem-Modellen. Diese Phonem-Modelle bestehen aus drei Teilen oder Segmenten, welche jeweils aus zwei Zuständen bestehen, von denen jeder eine Emissionswahrscheinlichkeit besitzt. Der erste und der letzte Teil sind kontextabhängig. Nur das mittlere Segment ist nicht vom Kontext abhängig, da dieses Segment als stationär angenommen wird. Diese Annahme ist wichtig als Grundlage für ein robustes Training mit begrenzten Trainingsdaten. Die Emissionswahrscheinlichkeiten der mittleren Segmente sind über verschiedene Worte gebunden, so daß eine gute Segmentierung durch das Viterbi-Verfahren im Training ermöglicht wird. Jedes Wortmodell besteht aus einer Folge geeigneter Segmentmodelle nach Maßgabe eines Transkriptionslexikons (K. Zünkler, "An ISDN speech server based on speaker independent continuous hidden markov models" in Proceedings of NATOASI, Springer-Verlag, Juli 1990).

Der Erkennungsprozeß wird nun in zwei Stufen eingeteilt. In der ersten Stufe wird ein Viterbi-Dekodierungs-Algorithmus mit Rückwärtsverkettung (Backtracking) verwendet. Das Ergebnis dieses ersten Schrittes ist eine bewertete Liste von Wortkandidaten zusammen mit ihren Viterbi-Pfaden. Im zweiten Schritt werden die besten zwei Kandidaten herangezogen und deren entsprechende Pfade werden verglichen. Dieser Vergleich kann anhand von Fig. 1 dargestellt werden. Fig. 1 zeigt die Viterbi-Pfade für die Modelle der Worte "drei" und "zwei" mit dem Ziel, die entsprechenden Modellzustände für jeden Zeitausschnitt zu bestimmen, welche durch den diskriminierenden Nachklassifikationsschritt verglichen werden. $t_1$ ist ein Zeitausschnitt mit verschiedenen Modellzuständen im Gegensatz zu beispielsweise dem Zeitausschnitt $t_2$, welcher keinen Beitrag zu den gewichteten Wortwahrscheinlichkeiten leistet.

Für jeden Zeitausschnitt gibt es genau einen Modellzustand in jedem Wortkandidaten. Auf diese Weise wird nur dieses Paar von Modellzuständen für diesen bestimmten Zeitausschnitt verglichen. Für jeden Kandidaten wird eine gewichtete Wahrscheinlichkeit berechnet und über den Viterbi-Pfad für alle Zeitausschnitte mit verschiedenen Modellzuständen aufsummiert. Nach diesem Vergleich der beiden Kandidaten wird der bessere von beiden mit dem nächsten Kandidaten der Liste verglichen, bis eine vorgegebene Zahl von Kandidaten verglichen worden ist. Es ist dabei nicht nötig, alle Kandidaten miteinander zu vergleichen. Experimente haben gezeigt, daß die Erkennungsrate gleichbleibt, wenn man stattdessen eine schnelle paarweise Selektionsmethode, z. B. das K.O.-Verfahren, verwendet.

Die in dieser Patentanmeldung verwendeten Fachbegriffe sind auf dem Gebiet der Mustererkennung und auf dem Gebiet der Spracherkennung üblich; ihre Bedeutung kann aus den folgenden Veröffentlichungen erschlossen werden:

Thomas W. Parsons, "Voice and Speech Processing", McGraw Hill 1987

K. Fukunaga, "Introduction to statistical pattern recognition", Academic Press, New York 1972

L. R. Rabiner and B.H. Juang, "An introduction to hidden markov models", IEEE Transactions on Acoustics, Speech and Signal Processing, (1):4-16, January 1986

J. Kittler, "Mathematical methods of feature selection in pattern recognition", Internat. Journ. Man-Machine Studies, 7:603-637, 1975

**Patentansprüche**

1. Verfahren zur Erkennung von Mustern in zeitvarianten Meßsignalen durch Klassifikation einer zeitlichen Folge von Merkmalsvektoren und paarweise Nachklassifikation mit folgenden Schritten:
   a) die zu klassifizierende Folge von Merkmalsvektoren wird mit Hilfe des Viterbi-Dekodierungs-Algorithmus segmentiert, wobei diese zu klassifizierende Folge mit einem Satz von Hidden-Markov-Modellen verglichen wird; hierzu wird für jedes Hidden-Markov-Modell eine Gesamt-Emissionswahrscheinlichkeit für die Erzeugung der zu klassifizierenden Folge durch dieses Hidden-Markov-Modell berechnet; anschließend wird durch Rückwärtsverkettung ein optimaler Zuordnungspfad von Merkmalsvektoren zu Zuständen der Hidden-Markov-Modelle ermittelt;
   dadurch gekennzeichnet, daß
   b) für ausgewählte oder alle Paare von Hidden-Markov-Modellen ein diskriminierender Vergleich ihrer Zuordnungen durchgeführt wird, indem modifizierte Gesamt-Emissionswahrscheinlichkeiten für jedes Hidden-Markov-Modell eines Paares unter der Voraussetzung berechnet werden, daß das jeweils andere Hidden-Markov-Modell des selben Paares mit dem betrachteten Hidden-Markov-Modell konkurriert, und indem das jeweils wahrscheinlichere Hidden-Markov-Modell eines Paares ermittelt wird; unter allen betrachteten Paaren wird das Hidden-Markov-Modell mit der größten Gesamt-Emissionswahrscheinlichkeit ausgewählt.

2. Verfahren nach Anspruch 1, bei dem die Gesamt-Emissionswahrscheinlichkeit für die Erzeugung der zu klassifizierenden Folge durch ein Hidden-Markov-Modell berechnet wird, indem für alle Merkmalsvektoren der zu klassifizierenden Folge und für alle Zustände des Hidden-Markov-Modells eine lokale logarithmierte Emissionswahrscheinlichkeit für die Erzeugung des jeweiligen Merkmalsvektors durch den jeweiligen Zustand berechnet wird, und indem eine akkumulierte logarithmierte Emissionswahrscheinlichkeit für jeden Zustand als Summe aus seiner lokalen logarithmierten Emissionswahrscheinlichkeit und der akkumulierten logarithmierten Emissionswahrscheinlichkeit seines besten möglichen Vorgängerzustandes berechnet wird, wobei der beste mögliche Vorgängerzustand protokolliert wird.

3. Verfahren nach einem der vorhergehenden Ansprüche, bei dem der diskriminierende Vergleich der Zuordnungen zweier Hidden-Markov-Modelle durchgeführt wird, indem für alle Merkmalsvektoren der zeitlichen Folge eine lokale logarithmierte modifizierte Emissionswahrscheinlichkeit für die Erzeugung des jeweiligen Merkmalsvektors durch den entsprechenden Zustand des jeweiligen Hidden-Markov-Modells berechnet wird, indem diese lokalen logarithmierten modifizierten Emissionswahrscheinlichkeiten rekursiv längs des bereits berechneten Zuordnungspfades zu einer akkumulierten logarithmierten modifizierten Emissionswahrscheinlichkeit addiert werden.

4. Verfahren nach Anspruch 3, bei dem die modifizierte lokale Emissionswahrscheinlichkeit für die Erzeugung eines Merkmalsvektors durch einen Zustand eines Hidden-Markov-Modells berechnet wird, indem eine logarithmierte Emissionswahrscheinlichkeit für jede Komponente dieses Merkmalsvektors berechnet wird und mit einem Gewicht multipliziert wird, und indem diese gewichteten logarithmierten Emissionswahrscheinlichkeiten über alle Komponenten dieses Merkmalsvektors summiert werden; dabei ist das Gewicht einer Komponente eines Merkmalsvektors ein Maß für die Zuverlässigkeit dieser Komponente unter der Voraussetzung, daß nur zwei bestimmte Zustände eines Hidden-Markov-Modells miteinander verglichen werden sollen.

5. Verfahren nach Anspruch 4, bei dem die Gewichte mit Hilfe eines statistischen Gütemaßes für die Zuverlässigkeit einer Merkmalsvektorkomponente ermittelt werden.

6. Verfahren nach Anspruch 4, bei dem die Gewichte mit Hilfe eines Trainingsverfahrens ermittelt werden.

## Claims

1. Method for recognizing patterns in time-variant measurement signals by classifying a temporal sequence of feature vectors and reclassification in pairs, comprising the following steps:
a) the sequence of feature vectors which is to be classified is segmented with the aid of the Viterbi decoding algorithm, this sequence to be classified being compared with a set of hidden Markov models; for this purpose, for each hidden Markov model a total emission probability is calculated for the generation of the sequence to be classified by this hidden Markov model; subsequently, an optimum assignment path from feature vectors to states of the hidden Markov models is determined by backtracking; and
characterized in that
b) for selected hidden Markov models, or for all pairs thereof, a discriminating comparison of their assignment is carried out by calculating modified total emission probabilities for each hidden Markov model of a pair on the assumption that the respective other hidden Markov model of the same pair competes with the hidden Markov model under review, and by determining the respective more probable hidden Markov model of a pair; the hidden Markov model having the highest total emission probability is selected from among all the pairs under review.

2. Method according to Claim 1, in which the total emission probability for generating the sequence to be classified by a hidden Markov model is calculated by calculating for all feature vectors of the sequence to be classified and for all states of the hidden Markov model a local logarithmic emission probability for generating the respective feature vector by the respective state, and by calculating an accumulated logarithmic emission probability for each state as a sum of its local logarithmic emission probability and the accumulated logarithmic emission probability of its best possible predecessor state, the best possible predecessor state being logged.

3. Method according to one of the preceding claims, in which the discriminating comparison of the assignments of two hidden Markov models is carried out by calculating for all feature vectors of the temporal sequence a local logarithmic modified emission probability for generating the respective feature vector by the corresponding state of the respective hidden Markov model by adding these local logarithmic modified emission probabilities recursively along the already calculated assignment path to an accumulated logarithmic modified emission probability.

**4.** Method according to Claim 3, in which the modified local emission probability for generating a feature vector by a state of a hidden Markov model is calculated by calculating a logarithmic emission probability for each component of this feature vector and multiplying it by a weighting, and by summing these weighted logarithmic emission probabilities over all components of this feature vector; the weighting of a component of a feature vector is in this case a measure of the reliability of this component on the assumption that only two specific states of a hidden Markov model are to be compared with one another.

**5.** Method according to Claim 4, in which the weightings are determined with the aid of a statistic quality measure for the reliability of a feature vector component.

**6.** Method according to Claim 4, in which the weightings are determined with the aid of a training method.

**Revendications**

**1.** Procédé de reconnaissance des formes dans des signaux de mesure variables dans le temps par classification d'une suite chronologique de vecteurs de traits distinctifs et postclassification par paires, comprenant les phases suivantes :

a) la suite de vecteurs de traits distinctifs à classifier est segmentée à l'aide de l'algorithme de décodage Viterbi, cette suite à classifier étant comparée à un groupe de modèles de Hidden-Markov ; à cet effet, on calcule pour chaque modèle de Hidden-Markov une probabilité d'émission totale pour la génération de la suite à classifier par ce modèle de Hidden-Markov ; on détermine ensuite par chaînage arrière un chemin de correspondance optimal entre les vecteurs de traits distinctifs et les états des modèles de Hidden-Markov ; caractérisé en ce que
b) les paires sélectionnées ou toutes les paires des modèles de Hidden-Markov sont soumises à une comparaison discriminatoire de leurs correspondances en calculant les probabilités d'émissions totales modifiées pour chaque modèle de Hidden-Markov d'une même paire, avec l'hypothèse que l'autre modèle de Hidden-Markov de la même paire se trouve en concurrence avec le modèle de Hidden-Markov considéré, et en déterminant à chaque fois le modèle de Hidden-Markov le plus probable d'une paire ; parmi toutes les paires considérées est choisi le modèle de Hidden-Markov ayant la plus grande probabilité d'émission totale.

**2.** Procédé selon la revendication 1, dans lequel la probabilité d'émission totale pour la génération de la suite à classifier est calculée par un modèle de Hidden-Markov en calculant pour tous les vecteurs de traits distinctifs de la suite à classifier et pour tous les états du modèle de Hidden-Markov une probabilité d'émission logarithmique locale pour la génération du vecteur de traits distinctifs respectif par l'état respectif, et en calculant une probabilité d'émission logarithmique accumulée pour chaque état représentant la somme de sa probabilité d'émission logarithmique locale et de la probabilité d'émission logarithmique accumulée de son meilleur état précédent possible, le meilleur état précédent possible étant listé.

**3.** Procédé seton l'une des revendications précédentes, dans lequel la comparaison discriminatoire des correspondances entre deux modèles de Hidden-Markov est effectuée en calculant pour tous les vecteurs de traits distinctifs de la suite chronologique une probabilité d'émission logarithmique locale modifiée pour la génération du vecteur de traits distinctifs respectif par l'état correspondant du modèle de Hidden-Markov respectif en additionnant ces probabilités d'émission logarithmiques locales modifiées de façon récurrente le long du chemin des correspondances déjà calculé en une probabilité d'émission logarithmique accumulée modifiée.

**4.** Procédé selon la revendication 3, dans lequel la probabilité d'émission locale modifiée pour la génération d'un vecteur de traits distinctifs par un état d'un modèle de Hidden-Markov est calculée en calculant une probabilité d'émission logarithmique de chaque composante de ce vecteur de traits distinctifs et en la multipliant par un poids et en totalisant ces probabilités d'émission logarithmiques pondérées de toutes les composantes de ce vecteur de traits distinctifs ; le poids d'une composante d'un vecteur de traits distinctifs est dans ce cas une mesure pour la fiabilité de cette composante à condition de ne comparer que deux états définis d'un modèle de Hidden-Markov.

**5.** Procédé selon la revendication 4, dans lequel les poids sont déterminés à l'aide d'un étalon de qualité statistique pour la fiabilité d'une composante d'un vecteur de traits distinctifs.

**6.** Procédé selon la revendication 4, dans lequel les poids sont déterminés à l'aide d'une procédure d'essai.

# FIG 1

EP 0 604 476 B1

Wortfolge 1. Satzhypothese:

Zeige → die → Brief → vom → Mai

Phonemfolge 1. Satzhypothese:
si t s ai g e d ie b r ie f f o m m ai si

Merkmalsvektorfolge:
...
ooooooooooooooooooo ••••••• ooooooooooooooo ••••••• ooooo
...

## FIG 2

Phonemfolge 2. Satzhypothese:
si t s ai g e d eh n b r ie f f o n n ai si

Wortfolge 2. Satzhypothese:

Zeige → den → Brief → von → Ney